# EUROPÄISCHE PATENTSCHRIFT

(11) **EP 1 585 780 B1**
(45) Veröffentlichungstag und Bekanntmachung des Hinweises auf die Patenterteilung: **11.07.2007**
(21) Anmeldenummer: 03815075.1
(22) Anmeldetag: 24.12.2003
(51) Int. Cl.: C08G 64/24

(54) **VERFAHREN ZUR HERSTELLUNG VON POLYCARBONATEN**
METHOD FOR PRODUCING POLYCARBONATES
PROCEDE DE PREPARATION DE POLYCARBONATES

(30) Priorität: 10.01.2003 DE 10300598
(43) Veröffentlichungstag der Anmeldung: 19.10.2005
(73) Patentinhaber: Bayer MaterialScience AG, 51368 Leverkusen (DE)
(72) Erfinder: KAUTH, Hermann, 47803 Krefeld (DE); KORDS, Christian, 47829 Krefeld (DE); HEUSER, Jürgen, 47803 Krefeld (DE)
(86) Internationale Anmeldenummer: PCT/EP2003/014881
(87) Internationale Veröffentlichungsnummer: WO 2004/063249

(56) Entgegenhaltungen:
- EP-A- 1 249 463
- FR-A- 1 452 218

## Beschreibung

Gegenstand der vorliegenden Erfindung ist ein Verfahren zur kontinuierlichen Herstellung von Polycarbonaten nach der Methode des Zweiphasengrenzflächenverfahrens unter Verwendung einer speziellen Dosierrate für Katalysatoren, welches die Herstellung eines Polycarbonates mit geringem Stickstoffgehalt ermöglicht, sowie die damit erhältlichen Polycarbonate.

Bei der Herstellung von Polycarbonaten hat sich das Zweiphasengrenzflächenverfahren seit vielen Jahren bewährt. Das Verfahren ermöglicht die Herstellung von thermoplastischen Polycarbonaten für eine Reihe von Einsatzgebieten wie z.B. Datenträger (CD, DVD), optische oder medizinische Anwendungen.

Polycarbonate können grundsätzlich nach dem Zweiphasengrenzflächenverfahren oder dem Schmelzeverfahren hergestellt werden.

Nach dem Zweiphasengrenzflächenverfahren können sie vollkontinuierlich, wie z.B. in der EP-A 1249 463 beschrieben, hergestellt werden.

Insbesondere bei kontinuierlichen Verfahrensvarianten nach dem Grenzflächenverfahren hat es sich gezeigt, dass die hergestellten Polycarbonate eine geringe Menge an Stickstoff enthalten, welcher in das Polycarbonat eingebaut wurde.

Durch diesen eingebauten Stickstoff werden jedoch die Eigenschaften des Polycarbonates, insbesondere die für den Einsatz im Bereich der Datenträger wichtigen Eigenschaften, negativ beeinflusst.

Nach einem diskontinuierlichen Verfahren hergestellte Polycarbonate sind üblicherweise frei von Stickstott, jedoch sind kontinuierliche Varianten aus Kostengründen häufig erwünscht.

Nach dem Schmelzeverfahren hergestellte Polycarbonate sind üblicherweise ebenfalls frei von Stickstoff, jedoch haben diese Materialien andere Nachteile wie z.B. einen hohen Gehalt an Monomeren, Monocarbonaten, Oligomeren und an verzweigten Strukturen.

Es bestand also die Aufgabe, ein vollkontinuierliches Zweiphasengrenzflächenverfahren zur Verfügung zu stellen, bei dem der Gehalt an eingebautem, gebundenem Stickstoff auf Gehalte zwischen 20 und 3 ppm reduziert ist.

Als nächstliegender Stand der Technik ist die DE-A 42 27 372 und die EP-A 1 249 463 der Anmelderin zu betrachten, in welcher bereits die apparative Anordnung des erfindungsgemäßen Verfahrens beschrieben ist. Es ist dem Stand der Technik jedoch keinerlei Lehre zu entnehmen, oder nur ein Hinweis zu finden, dass der Stickstoffgehalt kritisch ist bzw. wie diesem zu begegnen wäre.

Es wurde nun überraschend gefunden, dass man Polycarbonat kontinuierlich in sehr guter Produktqualität - gemessen am Gehalt an eingebauten Stickstoff - erhält, wenn man die dosierte Menge an Katalysator von 0,012 bis 0,03 mol Katalysator pro Mol eingesetztes Bisphenol verwendet.

Besonders gute Ergebnisse erzielt man, wenn man diese Katalysatordosierung in Kombination mit der Reaktorenanordnung "Umpumpreaktor" - bestehend aus Wärmeaustauscher mit Umpumpschleife und Verweilkessel - plus Verweilzeitrohre verwendet

Dies ist insbesondere deshalb überraschend, als der Fachmann zur Reduzierung des Stickstoffgehaltes versuchen würde die Stickstoffquelle, nämlich den Katalysator, zu reduzieren. Man würde also einen Maximal- und nicht einen Minimalwert als Grenzwert erwarten.

Gegenstand der vorliegenden Anmeldung ist ein Verfahren, zur kontinuierlichen Herstellung von Polycarbonaten, die geringe Mengen an gebundenem Stickstoff enthalten, nach der Methode des kontinuierlichen Zweiphasengrenz-flächen-Verfahrens aus Diphenolen, Phosgen, Kettenabbrechern Katalysator und ggf. Verzweigern in einem Gemisch aus wässrig-alkalischer Phase und organischer Lösungsmittelphase, dadurch gekennzeichnet, dass es sich bei der dosierten Menge an Katalysator um eine Menge von 0,012 bis 0,03 mol Katalysator pro Mol eingesetztes Bisphenol handelt.

Vorzugsweise umfasst dieses Verfahren die folgenden Verfahrensschritte:
1. Kontinuierliches Zusammenführen der organischen Phase und der wässrigen Phase in der Umpumpschleife eines Umpumpreaktors wobei sich eine Emulsion bildet, gegebenenfalls unter Verwendung eines Mischers, wobei die organische Phase ein für das Polycarbonat geeignetes Lösungsmittel ist und bereits das Phosgen enthält und die wässrige Phase aus Wasser und einem Gemisch von Alkalilauge und phenolischen Komponenten (Bisphenol und gegebenenfalls Monophenol als Kettenabbrecher) besteht,
   wobei
2. im Umpumpreaktor eine Temperatur von weniger als 60°C, vorzugsweise von 55°C - 25°C eingestellt ist, der Umpumpreaktor eine mittlere Verweilzeit von mindestens 2 Minuten, bevorzugt zwischen 2 und 15 Minuten anbietet und eine Teilmenge der entstandenen Emulsion kontinuierlich über den Verweilkessel aus dem Umpumpreaktor abgenommen wird,
   und
3. die entnommene Teilmenge dieser Emulsion dann durch Rohrreaktoren gepumpt wird, die mit Misch- und Verweilzonen ausgestattet sind und insgesamt eine Verweilzeit zwischen 2 Minuten und 40 Minuten, vorzugsweise 2-30 Minuten anbieten,
   wobei
   1) das Verhältnis (ausgedrückt in Molen/Mole) von dosierter Phosgenmenge zur Phosgenmenge, die theoretisch notwendig ist, um alles Bisphenol und Phenol zur Reaktion zu bringen, zwischen 1,12 und 1,22, vorzugsweise zwischen 1,13 und 1,20 beträgt,
   2) Phosgenlösung und Bisphenollösung werden dabei innerhalb des Umpumpreaktors direkt hinter dem Verweilkessel, vor der Pumpe, in die Umpumpschleife dosiert, gegebenenfalls über einen Mischer, der Kettenabbrecher kann ebenfalls in diese Umpumpschleife oder gegebenenfalls direkt in die Rohrreaktoren gefördert werden, s. 5)
   3) innerhalb des Umpumpreaktors wird auf die Saugseite der Pumpe Alkalilauge in einer Menge von 15 - 40 %, vorzugsweise 20 - 35 %, der insgesamt nachzudosierenden Menge nachdosiert,
   4) innerhalb des Umpumpreaktors werden in die Umpumpschleife gemäß 2) Bisphenol A- und Phosgenlösungen so zudosiert, dass die am Verweilkessel entnommene Teilmenge der Gesamtmenge der zudosierten Lösungen entspricht,
   5) in die aus dem Verweilkessel entnommene Teilmenge, unmittelbar vor der Einleitung in den Rohrreaktor, weitere Alkalilauge (85 - 60 %, vorzugsweise 80 - 65 % der gesamten nachzudosierenden Alkalilauge) und gegebenenfalls Kettenabbrecher zugegeben wird und
   6) nach weiteren 1 - 20 Minuten, vorzugsweise 1 - 15 Minuten Verweilzeit im Rohrreaktor der Katalysator in einem Verhältnis von 0,012 bis 0,03 mol Katalysator pro Mol eingesetztes Bisphenol zugegeben wird.
"hinter" und "vor" sind im vorliegenden Zusammenhang immer in Flussrichtung der Emulsion innerhalb des Umpumpreaktors zu verstehen.

Ein Umpumpreaktor besteht dabei aus einer Umpumpschleife, einer Pumpe zur Umpumpung der Reaktionsemulsion, gegebenenfalls als Mischer ausgestaltete Dosierstellen für organische Phase (Lösungsmittel enthaltend Phosgen) und wässrige Phase (Alkalilauge und Diphenolkomponente), einen Wärmeaustauscher sowie einen Verweilkessel, der parallel mit einer Entnahmemöglichkeit zur kontinuierlichen Entnahme eines Teilstromes ausgestattet ist.

Zum besseren Verständnis sei der "Umpumpreaktor" noch schematisch dargestellt:

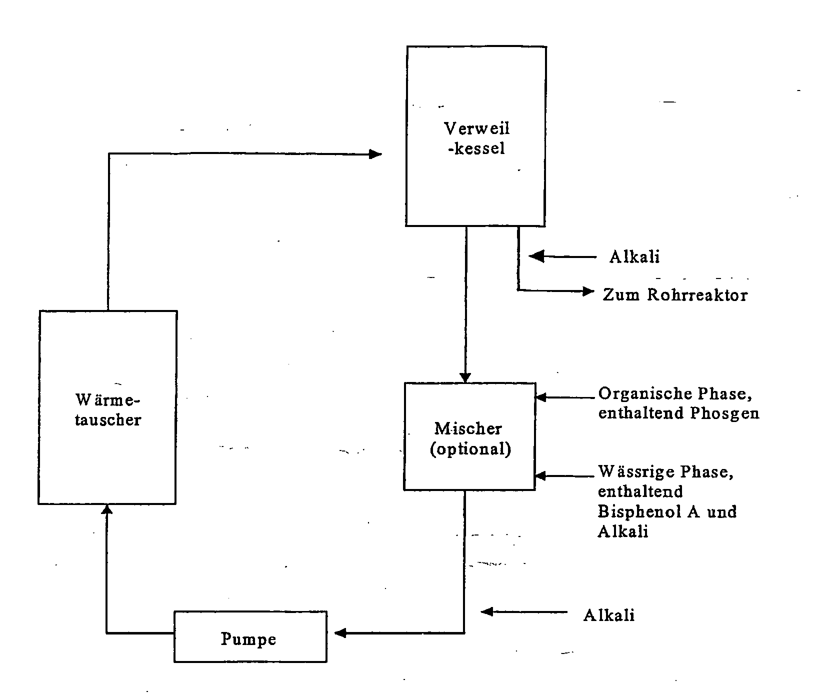

Ein Rohrreaktor besteht dabei aus Misch- und Verweilzeitrohren und ist hinter der Entnahmestelle des Verweilkessels des Umpumpreaktors nachgeschaltet.

Eine bevorzugte Ausführungsform des erfindungsgemäßen Verfahrens wird durch Einhalten der in EP-A 1 249 463, S. 4 Z.1-25 beschriebenen Dosierraten und Umpumpverhältnisse erhalten.

Durch den Einsatz des erfindungsgemäßen Verfahrens wird überraschenderweise ein Polycarbonat mit einem Stickstoffgehalt von 3 bis 20 ppm erhalten.

Geeignete Diphenole sind solche der Formel HO-Z-OH, in denen Z ein aromatischer Rest mit 6 bis 45 C-Atomen ist, der einen oder mehrere aromatische Kerne enthalten kann, substituiert sein kann und aliphatische Reste oder cycloaliphatische Reste oder Heteroatome als Brückenglieder enthalten kann.

Beispiele sind
Dihydroxydiphenyle,
Bis-(hydroxyphenyl)-alkane
Bis-(hydroxyphenyl)-cycloalkane
Bis-(hydroxyphenyl)-sulfide
Bis-(hydroxyphenyl)-ether
sowie deren kernalkylierte und kernhalogenierte Verbindungen.

Diese und weitere geeignete andere Diphenole sind z.B. in den US-PS 3 028 365, 4 982 014, 2 999 835, 3 148 172, 3 275 601, 2 991 273, 3 271 367, 3 062 781, 2 970 131 und 2 999 846, in den DE-A 15 70 703, 20 63 050, 20 63 052, 2211 956, der französischen Patentschrift 1 561 518 und in der DE-A 38 33 953 beschrieben.

Bevorzugte Diphenole sind:
2,2-Bis-(4-hydroxyphenyl)-propan (Bisphenol-A) und 1,1-Bis-(4-hydroxyphenyl)-3,3,5-trimethyl-cyclohexan (TMC-Bisphenol).

Es sei hier betont, dass das erfindungsgemäße Verfahren praktisch für alle bekannten Diphenole eingesetzt werden kann.

Die Diphenole werden im erfindungsgemäßen Verfahren in wässrig alkalischer Lösung eingesetzt, die Konzentration an Diphenolen beträgt dabei 10-20 %, bevorzugt 12,5 bis 17,5 %, die Menge an Alkali beträgt 1,0 bis 3,0 Mol Alkalilauge pro Mol Bisphenol, sie ist abhängig von der Löslichkeit des eingesetzten Bisphenols.

Das Phosgen wird in organischen Lösungsmitteln in einer Konzentration von 7-10 %, bevorzugt 8-9,5 % eingesetzt.

Geeignete Kettenabbrecher und Verzweiger sind literaturbekannt. Einige sind beispielsweise in der DE-A 38 33 953 beschrieben. Bevorzugte Kettenabbrecher sind Phenol, Cumylphenol, Isooctylphenol, para-tert.-Butylphenol. Die Kettenabbrecher können rein oder in unterschiedlicher Konzentration als Lösung in organischen Lösungsmitteln dosiert werden.

Bevorzugte Verzweiger sind Trisphenole und Tetraphenole sowie 3,3-Bis-(3-methyl-4-hydroxyphenyl)-2-oxo-2,3-dihydroindol. Auch die Verzweiger können rein oder in unterschiedlicher Konzentration als Lösung in organischen Lösungsmitteln dosiert werden.

Als Alkalilauge werden Natronlauge oder Kalilauge eingesetzt, gegebenenfalls können auch Erdalkalilaugen eingesetzt werden. Bevorzugt wird wässrige Natronlauge. Die Konzentration des NaOH in der wässrigen Natronlauge entspricht derjenigen der kommerziell erhältlichen Laugen, also zwischen 20 und 60 %, bevorzugt zwischen 30 und 50 %, ganz besonders bevorzugt ist Natronlauge welche direkt aus dem Amalgam- oder Membranverfahren, idealerweise dem Membranverfahren der Chlor-Alkali-Elektrolyse mit Konzentrationen von ca. 50 bzw. 32 % erhalten wird.

Alle Prozentangaben im vorliegenden Kontext sind als Gew.-% zu verstehen, soweit nichts anderes explizit angegeben ist.

Als Katalysatoren kommen im Prinzip alle für die Herstellung von Polycarbonaten nach dem Zweiphasengrenzflächenverfahren bekannten Katalysatoren, wie z.B. tert. Amine in Frage. Bevorzugt werden N-Ethyl-piperidin und Triethylamin.

Die organische Phase enthält Lösungsmittel bzw. ein Lösungsmittelgemisch, welches Polycarbonat löst. Geeignete Lösungsmittel sind alle bekannten Lösungsmittel, die Polycarbonat bei Temperaturen um 20°C zu mindestens 5 Gew.-% zu lösen in der Lage sind sowie deren Gemische.

Bevorzugt sind Methylenchlorid, Toluol, Monochlorbenzol, besonders bevorzugt sind Methylenchlorid und Gemische aus Methylenchlorid und Monochlorbenzol im Verhältnis von 20:80 Gew.-Teilen bis 75:25 Gew.-Teilen.

Über die gesamte Reaktion wird ein pH-Wert zwischen 9 und 14 eingestellt, bevorzugt zwischen 9,5 und 13,0. Dies geschieht dadurch, dass einmal zu Beginn die zum Lösen der Diphenole notwendige Menge Alkalilauge eingesetzt wird und darüber hinaus vor dem Wärmetauscher eine erste Nachdosierung der Alkalilauge erfolgt und daran anschließend vor den Rohrreaktoren gegebenenfalls zusammen mit dem Kettenabbrecher eine zweite Nachdosierung der Alkalilauge erfolgt.

Die Polycarbonate können in bekannter Weise zu beliebigen Formkörpern verarbeitet werden, wobei vor oder während der Verarbeitung die für thermoplastische Polycarbonate üblichen Additive wie Stabilisatoren, Entformungsmittel oder Flammschutzmittel, Füllstoffe oder Glasfasern zugesetzt werden können.

Die nach dem erfindungsgemäßen Verfahren erhältlichen Polycarbonate können als beliebige Formkörper oder auch Platten und Folien in bekannter Weise technisch eingesetzt werden, beispielsweise im Automobilsektor oder in optischen Anwendungen, insbesondere auch in optischen und magnetooptischen Speichermedien.

Beispielhaft, aber ohne einzuschränken seien die folgenden Anwendungen erwähnt:
1. Sicherheitsscheiben, die bekanntlich in vielen Bereichen von Gebäuden. Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-B 1 031 507).
8. Zur Herstellung von Fäden und Drähten (siehe beispielsweise DE-B 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269 324) zur Herstellung von lichtdurchlässigen und licht-streunenden Formteilen.
11. Zur Herstellung von Präzisionsspritzgußteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Fihnkameras (siehe beispielsweise DE-A 2 701 173).
13. Als Lichtübertragungsträger, insbesondere als Lichtleiterkabel (siehe beispielsweise EP-A1 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z. B. Scheinwerferlampen, als sogenannte "head-lamps", Streulichtscheiben oder innere Linsen.
19. Für medizinische Anwendungen, z.B. Oxygenatoren, Dialysatoren.
20. Für Lebensmittelanwendungen, wie z. B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
22. Für Sportartikel, wie z. B. Slalomstangen oder Skischuhschnallen.
23. Für Haushaltsartikel, wie z. B. Küchenspülen und Briefkastengehäuse.
24. Für Gehäuse, wie z. B. Elektroverteilerschränke.
25. Gehäuse für Elektrozahnbürsten und Föngehäuse.
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige.

Die nachfolgenden Beispiele sollen die vorliegenden Erfindung illustrieren, ohne sie jedoch einzuschränken.

### Beispiele

### Beispiel 1

In einen Umpumpreaktor werden vor der Pumpe über ein T-Stück 24.000 kg/h einer alkalischen Bisphenol A - Lösung, die 15 % Gew.-% BPA und 2,1 mol Natronlauge pro mol BPA enthält, sowie über ein weiteres T-Stück 1840 kg/h Phosgen gelöst in 21000 kg/h Lösungsmittel, welches aus 50 Gew.-% Methylenchlorid und 50 Gew.-% Monochlorbenzol besteht, eindosiert.

Zur Aufrechterhaltung der Alkalität werden 348 kg/h 32 %-ige Natronlauge zudosiert und das Reaktionsgemisch über den Wärmetauscher und den Verweilzeitbehälter zurück zur Pumpe geleitet, wobei die o.g. Stoffströme zudosiert werden.

Die Temperatur beträgt 38°C.

Eine Teilmenge der Emulsion, die so groß ist wie die zufließenden Rohstoffe, wird vor den Dosierstellen für BPA und Phosgen aus dem Verweilzeitbehälter einer weiteren Pumpe zugeleitet und durch einen Rohrreaktor gepumpt. Diesem Strom werden 1064 kg/h Natronlauge (32 Gew.-%) sowie 703 kg/h einer Lösung (20 Gew.-%) von p-tert.Butylphenol, gelöst in Lösungsmittelgemisch (50 Teile Methylenchlorid und 50 Teile Monochlorbenzol), zudosiert. Nach einer Verweilzeit von 10 Min. werden 29 kg/h N-Ethylpiperidin (0,0163 mol pro Mol Bisphenol A) in Form einer 5,2%igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von weiteren 10 Min. wird die Emulsion in einem Trenngefäß getrennt und die Polycarbonatlösung nach bekannten Verfahren z.B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

Am Polycarbonatgranulat werden folgende analytische Daten bestimmt:

| | |
|---|---|
| YI | = 1,33* |
| Eta rel | = 1,196** |
| Phenol. OH | = 90 ppm*** |
| Stickstoff | = 8 ppm**** |

| | |
|---|---|
| * gemessen nach ASTM E 313 ** gemessen nach ISO 1628/4 *** gemessen durch UV-Spektroskopie bei 546 nm nach Farbreaktion der phenol. Endgruppen mit TiCl4 **** gemessen nach ASTM D 4629 und DIN 51444 (Bestimmung von Stickstoff nach Antek) | |

### Beispiel 2

In einen Umpumpreaktor werden vor der Pumpe über ein T-Stück 27.000 kg/h einer alkalischen Bisphenol A - Lösung, die 15 % Gew.-% BPA und 2,1 mol Natronlauge pro mol BPA enthält, sowie über ein weiteres T-Stück 2090 kg/h Phosgen gelöst in 22950 kg/h Lösungsmittel, welches aus 50 Gew.-% Methylenchlorid und 50 Gew.-% Monochlorbenzol besteht, eindosiert.

Zur Aufrechterhaltung der Alkalität werden 445 kg/h 32 %-ige Natronlauge zudosiert und das Reaktionsgemisch über den Wärmetauscher und den Verweilzeitbehälter zurück zur Pumpe geleitet, wobei die o.g. Stoffströme zudosiert werden.

Die Temperatur beträgt 38°C.

Eine Teilmenge der Emulsion, die so groß ist wie die zufließenden Rohstoffe, wird vor den Dosierstellen für BPA und Phosgen aus dem Verweilzeitbehälter einer weiteren Pumpe zugeleitet und durch einen Rohrreaktor gepumpt. Diesem Strom werden 1135 kg/h Natronlauge (32 Gew.-%) sowie 740 kg/h einer Lösung (20 Gew-%) von p-tert.-Butylphenol, gelöst in Lösungsmittelgemisch (50 Teile Methylenchlorid und 50 Teile Monochlorbenzol), zudosiert. Nach einer Verweilzeit von 9 Min. werden 36 kg/h N-Ethylpiperidin (0,0179 mol pro Mol Bisphenol A) in Form einer 6,1 %igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von 9 Min. wird die Emulsion in einem Trenngefäß getrennt und die Polycarbonatlösung nach bekannten Verfahren z, B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

Am Polycarbonatgranulat werden folgende analytische Daten bestimmt:

| | |
|---|---|
| YI | = 1,32 |
| Eta rel | =1,193 |
| Phenol. OH | = 70 ppm |
| Stickstoff | = 5 ppm |

### Beispiel 3

In einen Umpumpreaktor werden vor der Pumpe über ein T-Stück 35.000 kg/h einer alkalischen Bisphenol A - Lösung, die 15 Gew.% BPA und 2,1 mol Natronlauge pro mol BPA enthält, sowie über ein weiteres T-Stück 2700 kg/h Phosgen gelöst in 31500 kg/h Lösungsmittel, welches aus 50 Gew.-% Methylenchlorid und 50 Gew.-% Monochlorbenzol besteht, eindosiert.

Zur Aufrechterhaltung der Alkalität werden 525 kg/h 32-%ige Natronlauge zudosiert und das Reaktionsgemisch über den Wärmetauscher und den Verweilzeitbehälter zurück zur Pumpe geleitet, wobei die o.g. Stoffströme zudosiert werden.

Die Temperatur beträgt 38°C.

Eine Teilmenge der Emulsion, die so groß ist wie die zufließenden Rohstoffe, wird vor den Dosierstellen für BPA und Phosgen aus dem Verweilzeitbehälter einer weiteren Pumpe zugeleitet und durch einen Rohrreaktor gepumpt. Diesem Strom werden 1540 kg/h Natronlauge (32 Gew.-%) sowie 966 kg/h einer Lösung (20 Gew.-%) von p-tert.-Butylphenol, gelöst in Lösungsmittelgemisch, zudosiert. Nach einer Verweilzeit von 7 Min. werden 55 kg/h N-Ethylpiperidin (0,026 mol pro Mol Bisphenol A) in Form einer 5,1 %-igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von 7 Min. wird die Emulsion in einem Trenngefäß getrennt und die Polycarbonatlösung nach bekannten Verfahren z.B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

Am Polycarbonatgranulat werden folgende analytische Daten bestimmt:
YI = 1,29
Eta rel = 1,194
Phenol. OH = 80 ppm
Stickstoff = 3 ppm

### Vergleichsbeispiel 1

Das Polycarbonat wird wie in EP-A 1 249 493 (prüfen nach 16.10.2002 Le A 34 952) Beispiel 3 beschrieben, hergestellt. Es werden 28 kg/h Ethylpiperidin (0,0107 mol pro Mol Bisphenol A) dosiert.

Am Polycarbonatgranulat werden folgende analytische Daten bestimmt:
YI = 1,4
Etarel = 1,196
Phenol. OH = 90 ppm
Stickstoff = 30 ppm

### Vergleichsbeispiel 2

Wie in Beispiel 1 beschrieben, jedoch werden folgende Mengen dosiert:

31000 kg/h BPA-Lösung, 2460 kg/h Phosgen, 523 kg/h NaOH 32 % in die Umpumpschleife und 1320 kg/h NaOH 32 % hinter die Umpumpschleife, 857 kg/h Butylphenollösung (20 %-ig), sowie 24 kg/h N-Ethylpiperidin (0,0104 mol pro Mol Bisphenol A) (4,8 %-ige Lösung).

Am Polycarbonatgranulat werden folgende analytische Daten bestimmt:

| | |
|---|---|
| YI | = 1,45 |
| Eta rel | = 1,193 |
| Phenol. OH | = 70 ppm |
| Stickstoff | = 35 ppm |

### Vergleichsbeispiel 3

Wie in Beispiel 1 beschrieben, jedoch werden folgende Mengen dosiert:

27000 kg/h BPA-Lösung, 2135 kg/h Phosgen, 416 kg/h NaOH 32 % in die Umpumpschleife und 1190 kg/h NaOH 32 % hinter die Umpumpschleife, 740 kg/h Butylphenollösung (20 %ig), sowie 21 kg/h N-Ethylpiperidin (0,0105 mol pro Mol Bisphenol A) (4,6 %-ige Lösung).

Am Polycarbonatgranulat werden folgende analytische Daten bestimmt:

| | |
|---|---|
| YI | = 1,38 |
| Eta rel | = 1,196 |
| Phenol. OH | = 75 ppm |
| Stickstoff | = 42 ppm |

Die Versuche belegen eindeutig, dass die Unterschreitung der Mindestdosierung an Katalysator überraschenderweise zu einem höheren Gehalt an Stickstoff im Polycarbonat führt.

## Patentansprüche

1. Verfahren, zur kontinuierlichen Herstellung von Polycarbonaten, die 3 bis 20 ppm an gebundenem Stickstoff enthalten, nach der Methode des kontinuierlichen Zweiphasengrenzflächenverfahrens aus Diphenolen, Phosgen, Kettenabbrechern, Katalysator und gegebenenfalls Verzweigern in einem Gemisch aus wässrig-alkalischer Phase und organischer Lösungsmittelphase, **dadurch gekennzeichnet, dass** es sich bei der dosierten Menge an Katalysator um eine Menge von 0,012 bis 0,03 mol Katalysator pro Mol eingesetztes Diphenol handelt.

2. Verfahren zur Herstellung von Polycarbonat nach dem Phasengrenzflächenverfahren gemäß Anspruch 1, **gekennzeichnet durch** die folgenden Verfahrensschritte:
a) Kontinuierliches Zusammenführen der organischen Phase und der wässrigen Phase in der Umpumpschleife eines Umpumpreaktors wobei sich eine Emulsion bildet, gegebenenfalls unter Verwendung eines Mischers, wobei die organische Phase ein für das Polycarbonat geeignetes Lösungsmittel ist und bereits das Phosgen enthält und die wässrige Phase aus Wasser und einem Gemisch von Alkalilauge und phenolischen Komponenten (Bisphenol und gegebenenfalls Monophenol als Kettenabbrecher) besteht,
wobei
b) im Umpumpreaktor eine Temperatur von weniger als 60°C eingestellt ist, der Umpumpreaktor eine mittlere Verweilzeit von mindestens 2 Minuten anbietet und eine Teilmenge der entstandenen Emulsion kontinuierlich über den Verweilkessel aus dem Umpumpreaktor abgenommen wird,
und
c) die entnommene Teilmenge dieser Emulsion dann **durch** Rohrreaktoren gepumpt wird, die mit Misch- und Verweilzonen ausgestattet sind und insgesamt eine Verweilzeit zwischen 2 Minuten und 40 Minuten anbieten,
wobei
1) das Verhältnis (ausgedrückt in Molen/Mole) von dosierter Phosgenmenge zur Phosgenmenge, die theoretisch notwendig ist, um alles Bisphenol und Phenol zur Reaktion zu bringen, zwischen 1,12 und 1,22 beträgt,
2) Phosgenlösung und Bisphenollösung werden dabei innerhalb des Umpumpreaktors direkt hinter dem Verweilkessel, vor der Pumpe, in die Umpumpschleife dosiert, gegebenenfalls über einen Mischer, der Kettenabbrecher kann ebenfalls in diese Umpumpschleife oder gegebenenfalls direkt in die Rohrreaktoren gefördert werden, s. 5),
3) innerhalb des Umpumpreaktors wird in die Umpumpschleife, hinter dem Verweilzeitkessel aber vor der Pumpe Alkalilauge in einer Menge von 15 - 40 % der insgesamt nachzudosierenden Menge nachdosiert,
4) innerhalb des Umpumpreaktors werden in die Umpumpschleife gemäß 2) Bisphenol A- und Phosgenlösungen so zudosiert, dass die am Verweilkessel entnommene Teilmenge der Gesamtmenge der zudosierten Lösungen entspricht,
5) in die aus dem Verweilkessel entnommene Teilmenge, unmittelbar vor der Einleitung in den Rohrreaktor, weitere Alkalilauge (85 - 60 %, der gesamten nachzudosierenden Alkalilauge) und gegebenenfalls Kettenabbrecher zugegeben wird und
6) nach weiteren 1 - 20 Minuten, vorzugsweise 1 - 15 Minuten Verweilzeit im Rohrreaktor der Katalysator in einem Verhältnis von mindestens 0,012 bis 0,03 mol Katalysator pro Mol eingesetztes Bisphenol zugegeben wird.

3. Polycarbonat mit einem Gehalt an gebundenem Stickstoff von 3 bis 20 ppm erhältlich nach dem Verfahren gemäß Anspruch 1.

4. Formkörper und Extrudate aus Polycarbonat gemäß Anspruch 3.

5. Optische Datenspeicher aus Polycarbonat gemäß Anspruch 3.

## Claims

1. Process for the continuous preparation of polycarbonates which contain 3 to 20 ppm of bonded nitrogen by the method of the continuous two-phase interface process from diphenols, phosgene, chain terminators, catalyst and optionally branching agents in a mixture of aqueous-alkaline phase and organic solvent phase, **characterized in that** the metered amount of catalyst is an amount of 0.012 to 0.03 mol of catalyst per mol of bisphenol employed.

2. Process for the preparation of polycarbonate by the phase interface process according to claim 1, **characterized by** the following process steps:
a) continuous bringing together of the organic phase and the aqueous phase in the circulating pump loop of a circulating pump reactor, during which an emulsion forms, optionally using a mixer, wherein the organic phase is a solvent which is suitable for the polycarbonate and already contains the phosgene and the aqueous phase comprises water and a mixture of alkali metal hydroxide solution and phenolic components (bisphenol and optionally monophenol as a chain terminator),
wherein
b) a temperature of less than 60°C is established in the circulating pump reactor, the circulating pump reactor provides an average dwell time of at least 2 minutes and a part amount of the emulsion formed is removed continuously from the circulating pump reactor via the detention tank,
and
c) the part amount of this emulsion removed is then pumped through tube reactors which are equipped with mixing and detention zones and provide a total dwell time of between 2 minutes and 40 minutes,
wherein
1) the ratio (expressed in moles/mole) of metered amount of phosgene to the amount of phosgene theoretically necessary to react all the bisphenol and phenol is between 1.12 and 1.22,
2) phosgene solution and bisphenol solution are metered here within the circulating pump reactor directly after the detention tank, before the pump, into the circulating pump loop, optionally via a mixer, and the chain terminator can also be conveyed into this circulating pump loop or optionally directly into the tube reactors, see 5),
3) within the circulating pump reactor alkali metal hydroxide solution is topped up in the circulating pump loop, after the detention tank but before the pump, in an amount of 15 - 40% of the total amount to be topped up,
4) within the circulating pump reactor bisphenol A and phosgene solutions are metered into the circulating pump loop according to 2) such that the part amount removed at the detention tank corresponds to the total amount of solutions metered in,
5) further alkali metal hydroxide solution (85 - 60% of the total alkali metal hydroxide solution to be topped up) and optionally chain terminator are added into the part amount removed from the detention tank, directly before introduction into the tube reactor, and
6) after a further 1 - 20 minutes, preferably 1 - 15 minutes dwell time in the tube reactor, the catalyst is added in a ratio of at least 0.012 to 0.03 mol of catalyst per mol of bisphenol employed.

3. Polycarbonate having a content of bonded nitrogen of 3 to 20 ppm, obtainable by the process according to claim 1.

4. Shaped articles and extrudates of polycarbonate according to claim 3.

5. Optical data stores of polycarbonate according to claim 3.

## Revendications

1. Procédé de préparation en continu de polycarbonates qui contiennent 3 à 20 ppm d'azote lié, selon le procédé interfacial diphasique continu, à partir de diphénols, de phosgène, d'agents de rupture de chaîne, de catalyseur et, le cas échéant, d'agents de ramification dans un mélange se composant d'une phase aqueuse-alcaline et d'une phase de solvant, **caractérisé en ce que** la proportion dosée de catalyseur est comprise entre 0,012 et 0,03 mol de catalyseur par mol de bisphénol mis en oeuvre.

2. Procédé de préparation de polycarbonate par le procédé interfacial diphasique selon la revendication 1, **caractérisé par** les étapes de procédé suivantes:
a) réunion continue de la phase organique et de la phase aqueuse dans la boucle de circulation d'un réacteur à circulation, ce qui entraîne la formation d'une émulsion, le cas échéant en utilisant un mélangeur, la phase organique étant un solvant approprié au polycarbonate et contenant déjà le phosgène, et la phase aqueuse étant constituée d'eau et d'un mélange de lessive alcaline et de composants phénoliques (bisphénol et éventuellement monophénol comme agent de rupture de chaîne),
b) une température inférieure à 60 °C étant ajustée dans le réacteur à circulation, lequel offre une durée de séjour moyenne d'au moins 2 minutes et une partie de l'émulsion formée étant prélevée en continu du réacteur à circulation via la cuve de séjour,
et
c) la partie prélevée de cette émulsion étant ensuite pompée au travers de réacteurs tubulaires, qui sont dotés de zones de mélangeage et de séjour et qui offrent ensemble une durée de séjour comprise entre 2 et 40 minutes,
1) le rapport (exprimé en mol/mol) entre la proportion de phosgène dosée et la proportion de phosgène qui est théoriquement nécessaire pour faire entrer en réaction tout le bisphénol et le phénol, est compris entre 1,12 et 1,22,
2) la solution de phosgène et la solution de bisphénol sont dosées à l'intérieur du réacteur à circulation, directement en aval de la cuve de séjour, en amont de la pompe, dans la boucle de circulation, le cas échéant via un mélangeur, l'agent de rupture de chaîne pouvant également être refoulé dans cette boucle de circulation ou, le cas échéant, directement dans les réacteurs tubulaires, cf. point 5),
3) à l'intérieur du réacteur à circulation, de la lessive alcaline est dosée par après, en aval de la cuve de séjour mais en amont de la pompe, dans une proportion comprise entre 15 et 40 % de la proportion totale à doser par après,
4) à l'intérieur du réacteur à circulation, les solutions de bisphénol A et de phosgène sont ajoutées progressivement dans la boucle de circulation selon 2), de manière telle que la partie prélevée dans la cuve de séjour corresponde à la proportion totale des solutions ajoutées progressivement,
5) un supplément de lessive alcaline (85 à 60 %, de la totalité de la lessive alcaline à ajouter par après) et, le cas échéant, d'agent de rupture de chaîne, est ajouté dans la partie prélevée de la cuve de séjour, immédiatement en amont de l'admission du réacteur tubulaire, et
6) le catalyseur est ajouté après 1 à 20 minutes, de préférence 1 à 15 minutes supplémentaires de séjour dans le réacteur tubulaire, dans une proportion comprise entre au moins 0,012 et 0,03 mol de catalyseur par mol de bisphénol mis en oeuvre.

3. Polycarbonate présentant une teneur en azote lié comprise entre 3 et 20 ppm, pouvant être obtenu par le procédé selon la revendication 1.

4. Pièces moulées et extrudées en polycarbonate selon la revendication 3.

5. Mémoires de données optiques en polycarbonate selon la revendication 3.
